Europäisches Patentamt

**European Patent Office**

Office européen des brevets

(11) Veröffentlichungsnummer : **0 131 753**
**B1**

(12) **EUROPÄISCHE PATENTSCHRIFT**

(45) Veröffentlichungstag der Patentschrift :
23.12.87

(51) Int. Cl.⁴ : **A 22 C 13/02**

(21) Anmeldenummer : **84106685.5**

(22) Anmeldetag : **12.06.84**

(54) Verfahren zum Raffen von schlauchförmigen Hüllen und Vorrichtung für dieses Verfahren.

(30) Priorität : **20.06.83 DE 3322105**

(43) Veröffentlichungstag der Anmeldung :
**23.01.85 Patentblatt 85/04**

(45) Bekanntmachung des Hinweises auf die Patenterteilung : **23.12.87 Patentblatt 87/52**

(84) Benannte Vertragsstaaten :
**AT BE CH DE FR GB IT LI LU NL SE**

(56) Entgegenhaltungen :
**EP-A- 0 025 923**
**EP-A- 0 050 161**
**EP-A- 0 073 321**
**DE-A- 2 132 279**
**DE-B- 1 288 944**
**FR-A- 1 539 366**
**FR-A- 2 153 378**
**US-A- 3 209 398**
**US-A- 3 619 854**

(73) Patentinhaber : **HOECHST AKTIENGESELLSCHAFT**
**Postfach 80 03 20**
**D-6230 Frankfurt am Main 80 (DE)**

(72) Erfinder : **Romeike, Arno**
**Flachsbühlstrasse 21**
**D-6204 Taunusstein 2 (DE)**
Erfinder : **Regner, Richard**
**Holthausenstrasse 12**
**D-6500 Mainz-Bretzenheim (DE)**
Erfinder : **Weinheimer, Alois**
**Weinheimer Landstrasse 109**
**D-6508 Alzey (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung bezieht sich auf ein Verfahren zum Raffen von schlauchförmigen Hüllen, insbesondere Wursthüllen, von der im Oberbegriff des Anspruchs 1 genannten Art, bei dem bekanntlich die Hülle in Richtung ihrer Längsachse gefördert und im aufgeblasenen Zustand mit einem Raffwerkzeug gerafft wird. Der erhaltene geraffte Hüllenteil wird dann nach Erreichen einer vorbestimmten Länge als Raupe abgetrennt.

Die Erfindung bezieht sich ferner auf eine Einrichtung zur Durchführung dieses Verfahrens von der Art, wie sie im Oberbegriff des Anspruchs 5 angegeben ist. Die bekannten Einrichtungen zum Raffen von schlauchförmigen Hüllen bestehen im wesentlichen aus einem Raffdorn im Innern der zu raffenden Hülle und Förderelementen zur Fortbewegung der vom freien Ende des Raffdorns zugeführten Hülle in aufgeblasenem Zustand über den Raffdorn, einem am Umfang des Schlauchs angreifenden Raffwerkzeug, wobei sich der Raffdorn durch das Raffwerkzeug erstreckt und die Hülle von innen abstützt, sowie einem Trennelement zum Abtrennen einer Raupe nach Erreichen einer vorbestimmten Länge.

Sofern die Raupen allerdings selbsttragend sein sollen, was gewöhnlich verlangt wird, ist es erforderlich, die schlauchförmige Hülle sehr dicht zu raffen. Bei solchen Einrichtungen ist ein den Vorschub des gerafften Hüllenteils zulassendes Widerlager zur Ausbildung einer Gegenkraft gegen die Raffkraft notwendig.

So wird beispielsweise nach der US-A-4 359 806 (EP-A-0 050 161) ein Widerlager in Form eines Anschlages verwendet, der auf dem Raffdorn axial verschiebbar angeordnet und bei der Raupenbildung gesteuert zurückbewegbar ist. Bei dieser Einrichtung besteht der Raffdorn allerdings aus einem Stück. Er muß in Arbeitsstellung mit seinem einen Ende das Raffwerkzeug durchsetzen und dann zum Abtrennen einer fertig gestellten Raupe vollständig aus dem Raffwerkzeug herausgezogen werden, bis sein Ende frei vor dem Raffwerkzeug steht.

Zum Abschneiden und Entfernen einer Raupenlänge vom ungerafften Hüllenteil ist es bei dieser Einrichtung außerdem erforderlich, zunächst das Raffwerkzeug anzuhalten und dann erst den Raffdorn axial in Raffrichtung aus dem Raffwerkzeug herauszuziehen. Nach dem Durchschneiden der Hülle und dem Wegschwenken des Raffdorns mit der zuvor gebildeten Raupe wird ein leerer Raffdorn entgegen der Raffrichtung in das Raffwerkzeug hinein geschoben. Erst dann kann das Raffwerkzeug wieder in Bewegung gesetzt werden. Wenn auch der axiale Verschiebeweg des Raffdorns bei dieser Vorrichtung relativ kurz ist, so entstehen doch durch das abwechselnde Beschleunigen und Abbremsen des Raffwerkzeugs lange Totzeiten zwischen aufeinanderfolgenden Raffvorgängen. Ein fortgesetztes Rotieren des Raffwerkzeugs, während der Raffdorn aus dem Raffwerkzeug herausgezogen ist, ist aber nicht möglich, da dann das Hüllenmaterial nicht mehr von innen abgestützt und dadurch vom Raffwerkzeug zusammengedrückt wird, wodurch es stark mechanisch belastet wird. Außerdem würden dann Schwierigkeiten bestehen, den Raffdorn in das nun zusammengedrückte Hüllenmaterial hineinzuschieben. Ein weiterer Nachteil dieser Einrichtung besteht darin, daß eine wirksame Zentrierung des Raffdorns mit der Raupe während der Raupenbildung schwierig ist und mit Mitteln erreicht werden soll, die relativ aufwendig und beim Abziehen der Raupe nur hinderlich sind. Technische Schwierigkeiten dürften insbesondere dadurch auftreten, daß die zur Zentrierung des Raffdorns vorgesehenen Profilrollen zu Beginn des Raffvorgangs von einer Gegenhalterhülse auf die entstehende Raupe aufgleiten müssen, wobei die Profilrollen infolge ihrer hierbei erfolgenden Bewegung auf einer Kreisbahn den Raffdorn in einer horizontalen Ebene verschieben. Daraus folgt, daß die Lage des Raffdorns während des Raffens nicht exakt konstant gehalten werden kann.

Es sind auch Einrichtungen bekannt, bei denen ein einziger, ortsfester Raffdorn verwendet wird, bei denen allerdings ein sauberes Durchschneiden der Hülle nicht ohne weiteres möglich ist.

Bei einer bekannten Einrichtung dieser Art (DE-C-12 95 414) wird die Raupe von dem gerafften Hüllenteil im Abstand vom Raffwerkzeug und in Raffrichtung erst nach dem Widerlager, das zur Ausbildung einer Gegenkraft zur Raffkraft vorgesehen ist, abgetrennt. Das Abtrennen erfolgt durch Anritzen, nicht durch Schneiden. Die abgetrennte Raupe wird dann über das Abstreifende des Raffdorns mit einer besonderen Abstreifeinrichtung auf einen axial sich anschließenden Aufnahmedorn verschoben. Das Abstreifende des bekannten Raffdorns wird von Klemmbacken festgehalten, die zum Abstreifen der Raupe gelöst werden müssen. Die Aufnahmedorne befinden sich auf einem Revolverkopf, der schrittweise weitergedreht wird und auf dem die Raupen verdichtet und anschließend ausgeworfen werden. Auch bei der Einrichtung der US-A-3 209 398 wird die Raupe mit einer besonderen Abstreifeinrichtung auf einen axial anschließenden Transportdorn verschoben und dort weiterbehandelt.

Ein wesentlicher Nachteil dieser bekannten Vorrichtungen besteht darin, daß sich die Raupen nicht sauber abschneiden lassen, so daß Fetzenbildung am Raupenende auftreten kann. Diese Vorrichtungen zeigen außerdem den Nachteil, daß sie relativ aufwendig konstruiert sind. Die Klemmbacken für das zweite Ende des Raffdorns (DE-C-1 295 414) ebenso wie die Abstreifeinrichtungen sind kompliziert zu steuern. Schließlich besteht bei diesen bekannten Vorrichtungen die Gefahr, daß das Schlauchmaterial durch das Abschieben der Raupen vom Raffdorn auf den Transport- oder Aufnahmedorn verletzt wird, sofern die Raupen relativ dicht gerafft sind. Ein weiterer wesentlicher Nachteil dieser Raffvorrichtungen besteht darin, daß der Raffdorn nicht um seine Längsachse rotieren kann oder nur mit großem technischem Aufwand rotierbar ausgebildet werden könnte. Durch eine solche Rotationsbewegung des Raffdorns könnte der geraffte Hüllenteil während des Raffvorgangs in Rotation versetzt werden, wodurch man besonders dicht geraffte Raupen erhalten würde. Die Rotation des gerafften Hüllenteils während des Raffens ist an sich bekannt, wobei die Drehbewegung durch den Raffdorn (DE-B-12 88 944) oder durch eine Gegenkraft (EP-A-0 073 321) auf den gerafften Hüllenteil übertragen wird. Auch bei diesen bekannten Verfahren ist jedoch kein zweiteiliger Raffdorn vorgesehen, welcher ein Abtrennen der Raupe neben dem Raffwerkzeug erlaubt.

Im Gegensatz zu den vorgenannten Vorrichtungen enthält die Wurstfüllmaschine der US-A-4 358 873 (EP-A-0 025 923) eine Raffeinheit mit einem Raffdorn, der aus zwei Dorneinheiten besteht, die während des Raffvorgangs fluchtend in Eingriff bringbar sind. Nach Fertigstellung einer gerafften Hüllenlänge wird die in Raffrichtung gesehen zweite Dorneinheit axial verschoben, der geraffte Hüllenteil abgetrennt und auf der zweiten Dorneinheit weggeschwenkt. Eine leere Dorneinheit tritt dann an die Stelle der zweiten Dorneinheit.

Diese Einrichtung ist allerdings noch viel weniger geeignet, besonders dicht geraffte, selbsttragende, biegesteife Raupen herzustellen als dies mit den Einrichtungen der obengenannten Druckschriften möglich ist. Sie zeigt beispielsweise keine Organe, mit denen die in Falten gelegte Hülle weiter verdichtet und zusammengepreßt werden könnte. Außerdem kann der erhaltene geraffte Schlauch keinen Hohlraum mit gleichmäßigem Querschnitt und glatter Innenwand aufweisen, da die zum Aufblasen der Schlauchhülle vorgesehene Luftzuführung sich außerhalb des Raffdorns befindet und sich durch das Raffwerkzeug erstreckt.

Es ist aber bei dieser Einrichtung auch gar nicht beabsichtigt, besonders dicht geraffte Raupen herzustellen, denn die gerafften Hüllenlängen sollen ja nicht als selbsttragende Raupen in den Handel gebracht werden, sondern werden — ständig unterstützt von innen — unmittelbar nach ihrer Herstellung auf das Füllrohr einer Wurstfüllmaschine aufgebracht, dort abschnittsweise mit Wurstbrät gefüllt und verschlossen.

Ausgehend von diesem Stand der Technik liegt der Erfindung die Aufgabe zugrunde, eine Vielzahl von Problemen beim Raffen zu lösen.

Die Erfindung soll das Verfahren und die Einrichtung der eingangs genannten Art dahingehend weiterbilden, daß das Verfahren einfacher durchgeführt werden kann und die Einrichtung weniger aufwendig gebaut ist, obwohl eine Rotation des Raffdorns vorgesehen werden soll. Die erhaltenen Raupen sollen dicht gerafft, selbsttragend und biegesteif sein.

Außerdem soll die Einrichtung die Möglichkeit bieten, daß die Totzeiten zwischen den einzelnen Raffvorgängen verkürzt werden. Sie soll aber trotz rascheren Bewegungsablaufs eine schonende Behandlung des Schlauchmaterials gestatten. Ferner sollen sich die Raupen mit einem glatten Schnitt von der Hülle abtrennen lassen.

Diese Aufgabe wird erfindungsgemäß dadurch gelöst, daß das Verfahren die im Anspruch 1 und die Einrichtung die im Anspruch 5 genannten Merkmale aufweist. Die abhängigen Ansprüche geben Weiterbildungen des Verfahrens bzw. der Einrichtung an.

Diese Ausgestaltung erlaubt es, den gerafften Hüllenteil problemlos abzutrennen und auf schonende Weise vom Raffdorn, auf dem sich die Raupe teilweise in reibschlüssigem Kontakt befindet, wegzuführen, z. B. in eine Station zur weiteren Verdichtung. Die Raupe kann somit unmittelbar nach dem Raffvorgang auf ein noch höheres Maß verdichtet werden, so daß die Einrichtung eine höhere Produktionsgeschwindigkeit zuläßt. Die Einrichtung ist relativ einfach aufgebaut und kann auch auf verschiedene sonst notwendige Antriebs- und Steuereinheiten verzichten.

Die schlauchförmige Hülle besteht aus dem für Lebensmittelhüllen, insbesondere Wursthüllen, üblichen Material, wie z. B. Cellulose, und ist gegebenenfalls faserverstärkt, beispielsweise mit einer Papiereinlage. Die Hülle kann bekannte Beschichtungen auf ihrer Außen- und/oder Innenseite aufweisen, wie sie insbesondere bei Wursthüllen je nach Wursttyp üblich sind.

Bei dem Verfahren der Erfindung wird die Hülle auf übliche Weise in Richtung ihrer Längsachse gefördert und im aufgeblasenen Zustand mit einem Raffwerkzeug bis zum Erreichen einer vorbestimmten Länge gegen eine zurückweichende Gegenkraft gerafft. Der geraffte Hüllenteil sitzt, in Raffrichtung gesehen, am Ende der ersten Dorneinheit, die sich im Raffbereich befindet, gegebenenfalls auch noch am Anfang der zweiten Dorneinheit, d. h. bereits außerhalb des Raffbereichs in reibschlüssigem Kontakt auf diesen Einheiten und wird auf diese Weise von innen abgestützt. Neben dem Ende des Raffwerkzeugs wird die innere Abstützung des gerafften Schlauchteils in der Weise durchgeführt, daß der Kontakt des gerafften Hüllenteils zur inneren Abstützung relativ lose ist. Diese Abstützung erfolgt mit der zweiten Dorneinheit. Während des Raffens ist der geraffte Hüllenteil durchgehend von innen abgestützt.

Nach Erreichen einer vorbestimmten Länge des gerafften Hüllenteils wird die Förderung der Hülle kurzzeitig unterbrochen und die innere Abstützung der Hülle in Raffrichtung nach dem Raffwerkzeug über eine kurze Strecke entfernt. Zu diesem Verfahrensschritt wird die zweite Dorneinheit axial in Raffrichtung und gegebenenfalls auch die erste Dorneinheit, allerdings in entgegengesetzter Richtung, verschoben. Die Kontaktstelle, an der die beiden Dorneinheiten miteinander in Kontakt treten bzw. voneinander getrennt werden, liegt in Raffrichtung neben dem Ende des Raffwerkzeuges. Der geraffte Hüllenteil wird durch die Bewegung der Dorneinheiten ein kurzes Stück an der besagten Kontaktstelle wieder aufgezogen, d. h. entrafft. Dieser entraffte Hüllenteil, der nun von innen nicht mehr unterstützt ist, wird durchgetrennt, insbesondere durch Schneiden. Das Entfernen der abgeschnittenen Raupe aus dem Raffbereich erfolgt auf der gleichen inneren Unterstützung, auf der sie danach auf an sich bekannte Weise, z. B. in verschiedenen Stufen, auf ein gewünschtes Maß verdichtet werden kann.

Während des gesamten Verfahrens wird die Schlauchhülle im Raffbereich von innen durch die erste Dorneinheit unterstützt. Diese ständige innere Unterstützung des noch nicht gerafften Schlauchteils, auch während des Trennvorgangs, hat insbesondere den Vorteil, daß das Raffwerkzeug ständig, auch während des Schneidens, bewegt werden kann und die Totzeiten zwischen den eigentlichen Raffvorgängen, bei denen der Schlauch gefältelt wird, herabgesetzt werden.

Ein weiteres wichtiges Merkmal des Verfahrens besteht darin, daß der geraffte Hüllenteil durch Rotation seiner reibschlüssigen inneren Abstützung während der Einwirkung der Raffkraft in Rotation um seine Längsachse versetzt wird. Somit beschreibt die Hülle gleichzeitig eine längsaxiale Vorwärtsbewegung und eine rotierende Bewegung.

Eine besonders hohe Verdichtung in der gerafften Hülle wird dann erzielt, wenn auch die auf die rotierende Hülle einwirkende Raffkraft selbst eine Rotationsbewegung ausführt. Bei dieser Verfahrensvariante wird die zum Raffen dienende Kraft von zumindest einem um die Längsachse der Schlauchhülle rotierenden Werkzeug aufgebracht. Das Raffen der Schlauchhülle erfolgt dann in der Weise, daß durch das Zusammenschieben der Schlauchhülle in axialer Richtung gegen eine zurückweichende Gegenkraft eine spiralförmig um die Raupenlängsachse verlaufende Hauptfalte entsteht, wodurch ein hohes Raffverhältnis und hohe Knickfestigkeit der Raupe erreicht wird. Insbesondere befindet sich das zum Raffen dienende Werkzeug während des Raffvorgangs ständig im Krafteingriff mit der Schlauchhülle und überträgt die zur Ausbildung einer biegesteifen Raupe ausreichende Preßkraft auf die Schlauchhülle. Vorteilhafterweise wird der zu raffenden Hülle vor dem eigentlichen Raffvorgang eine Vertiefung in Form einer exakten, durchgehenden Schraubenlinie eingeprägt, wie es auch bei dem Verfahren der US-A-3 988 804 vorgesehen ist. Nach der Erfindung wird nun zusätzlich zur rotierenden Raffkraft — wie oben beschrieben — die Hülle in Rotation versetzt. Überraschenderweise hat sich dabei gezeigt, daß dann, wenn das zum Aufbringen der Raffkraft dienende Werkzeug entgegengesetzt zum gerafften Hüllenteil rotiert, eine besonders hoch verdichtete, biegesteife geraffte Hülle erhalten wird.

Die Einrichtung der Erfindung zeigt einen aus zwei Dornabschnitten oder Dorneinheiten bestehenden funktionell einheitlichen Raffdorn, wobei der erste Dornabschnitt mit seinem zweiten Ende nicht wesentlich über das Raffwerkzeug hinausragt. Der zweite Dornabschnitt schließt sich an den ersten Dornabschnitt an. Überraschenderweise benötigt der erste Dornabschnitt an seinem zweiten Ende, d. h. an der Kontaktstelle mit dem zweiten Dornabschnitt, keine Abstützung, die für eine Entfernung der Raupen hinderlich wäre ; er wird vielmehr durch den zweiten Dornabschnitt, der koaxial in den ersten Dornabschnitt eingreift, in erster Linie aber durch die Förderelemente, welche sich am freien ersten Ende des ersten Dornabschnitts befinden, gestützt und während des Raffens in ortsfester, zentraler Lage gehalten. Die Förderelemente sind beispielsweise als Walzenpaare ausgebildet, die über die aufgeblasene Hülle am Umfang des ersten Dornabschnitts angreifen.

Nach Erreichen einer vorbestimmten gerafften Hüllenlänge hält man den Antrieb der Förderelemente an. Gleichzeitig wird der Raffdorn in seine zwei Teile getrennt, indem der in Raffrichtung zweite Dornteil, d. h. die sogenannte zweite Dorneinheit, längsaxial in Raffrichtung entfernt wird, wobei bereits eine kurze Weglänge von kleiner als 5 cm ausreichend ist, um einen Durchtritt für ein Trennelement zu schaffen. Diese Weglänge wird außerdem so gewählt, daß die Länge des im Trennbereich wieder entrafften Hüllenteils gerade ausreicht, um die geraffte Hülle in dem entrafften Hüllenteil abzuschneiden.

Das Entraffen des Hüllenteils im Trennbereich erfolgt z. B. durch die längsaxiale Bewegung der Dorneinheiten, bei der die Raffalten auseinandergezogen werden, und/oder durch von außen angreifende zangenförmige Werkzeuge. Durch die längsaxiale Verschiebung der zweiten Dorneinheit besteht dann auch die Möglichkeit, die zweite Dorneinheit mitsamt der darauf vorhandenen, abgetrennten Raupe, aus dem Raffbereich zu entfernen und gegebenenfalls einer Verdichtungsstation zuzuführen.

Diese längsaxiale Bewegung des zweiten Dornabschnitts geschieht auf an sich bekannte Weise, beispielsweise durch einen Revolverkopf oder eine Revolverplatte, an dem bzw. an der z. B. parallel zueinander stehende weitere Dornabschnitte oder Dorneinheiten angeordnet sind und der in Raffrichtung um die besagte Weglänge verschoben wird. Sobald eine Länge des gerafften Hüllenteils abgeschnitten ist, wird der zweite Dornabschnitt mit der abgeschnittenen Raupe gegen einen dieser weiteren, noch leeren Dornabschnitte ausgetauscht.

Ein Trennelement, z. B. in Form eines Messers, durchtrennt mit einem glatten Schnitt die geraffte Hülle im Zwischenraum zwischen den beiden voneinander getrennten Raffdornabschnitten. Danach wird durch Drehung des Revolverkopfs, z. B. in einer zum Raffdorn parallelen Drehachse, wenn die weiteren Dorneinheiten parallel zueinander und parallel zum Raffdorn angeordnet sind, oder durch Drehung in einer vertikalen Drehachse, wenn die weiteren Dorneinheiten sternförmig um die Drehachse angeordnet sind, die nächste, noch freie Dorneinheit in koaxiale Position zur ersten Dorneinheit und durch längsaxiales Verschieben entgegen der Raffrichtung mit dieser fluchtend zum Eingriff gebracht. Diese nächste Dorneinheit bildet nun als neue zweite Dorneinheit zusammen mit der ersten Dorneinheit den vollständigen Raffdorn. Das Zusammenfügen der beiden Dorneinheiten zum Raffdorn erfolgt außerhalb des Raffbereichs und ist einfach durchführbar.

Nach der erneuten Herstellung des kompletten Raffdorns starten die Förderelemente von neuem und transportieren die Schlauchhülle in Richtung auf das Raffwerkzeug.

Während der Unterbrechung des Antriebs der Förderelemente kann man überraschenderweise das Raffwerkzeug weiterhin laufen lassen, ohne daß die Gefahr einer Beschädigung des Hüllenmaterials durch das rotierende Raffwerkzeug besteht. Durch das Abtrennen der Raupe kann die im ungerafften Schlauchteil vorhandene Luft entweichen, so daß das Raffwerkzeug am Umfang der nun nicht mehr aufgeblasenen Hülle nicht angreifen kann. Außerdem verhindert der erste Dornabschnitt eine Beschädigung der Hülle durch das Raffwerkzeug, da er ständig im Raffbereich verbleibt und dort die Hülle auch während dieser Unterbrechung von innen abstützt. Durch die ständige Rotation des Raffwerkzeugs entfällt das sonst erforderliche zeit- und energieaufwendige Beschleunigen und Abbremsen des Raffwerkzeugs zu Beginn und am Ende der Herstellung jeder Raupe.

Der Raffdorn hat die Form eines hohlen Rohres, das zweiteilig aus den beiden Dorneinheiten aufgebaut ist. Während durch das in Raffrichtung zweite Ende der zweiten Dorneinheit die zum Aufblasen des Schlauchs erforderliche Luft eingepreßt wird, wird die Luft aus dem ersten Ende der ersten Dorneinheit ausgepreßt, um die Hülle in aufgeblasenem Zustand zu halten.

Erfindungswesentlich ist auch, daß die erste Dorneinheit einen Außenumfang aufweist, der im Raffbereich einen die Innenbohrung der gerafften Hülle bestimmenden Wert aufweist, dagegen die zweite Dorneinheit im darauffolgenden Bereich, jenseits der Trennstelle, in der die geraffte Schlauchlänge abgeschnitten wird, einen kleineren Außenumfang besitzt. Die durch das Raffwerkzeug erzeugten Raffalten der Schlauchhülle werden durch die vom Raffwerkzeug ausgeübte Raffkraft gegen das Widerlager zusammengestaucht und üblicherweise auch fest gegen den Raffdornaußenumfang im Raffbereich angedrückt. Infolgedessen sitzt der geraffte Schlauchteil im Raffbereich relativ fest auf dem Raffdorn, was als reibschlüssiger Kontakt bezeichnet wird. Da der Raffdorn aber im anschließenden Bereich der zweiten Dorneinheit einen verringerten Umfang besitzt, ist dort der Kontakt mit dem gerafften Hüllenteil nur noch lose. Das hat den Vorteil, daß sich die abgetrennte Raupe von der zweiten Dorneinheit in einem späteren Schritt leicht entfernen läßt.

Das Raffwerkzeug besteht aus üblichen Teilen, z. B. aus mehreren ausgekehlten Raffrädern, die eine Exzenterbewegung ausführen oder einem rotierenden hülsenförmigen Teil, welches auf seiner Innenwand einen schraubenförmig gewundenen Vorsprung aufweist und in der US-A-4,185,358 beschrieben ist. Es bedarf für die Erfindung keiner besonderen Anpassung.

Das Widerlager ist auf der zweiten Dorneinheit längsaxial beweglich und weicht in Raffrichtung mit zunehmender Raupenlänge zurück. Es zeigt die Form eines Anschlags oder einer Buchse, die den zweiten Dornteil ringförmig umgibt. Es wird beispielsweise über einen hydraulischen Zylinder längsaxial fortbewegt. Jede weitere Dorneinheit, die zum Austausch der zweiten Dorneinheit vorgesehen ist, trägt ein solches Widerlager.

Es ist ein weiteres erfindungswesentliches Merkmal, daß die zweite Dorneinheit um ihre Längsachse rotierbar ausgebildet ist, wobei die dazu erforderlichen Antriebselemente beispielsweise im Bereich der Revolverplatte angeordnet sind. Der Kontakt zwischen den beiden Dorneinheiten ermöglicht, daß die erste Dorneinheit bei der Drehung von der zweiten Dorneinheit mitgenommen wird. Hierzu ist ein form-, reib- oder kraftschlüssiger Kontakt der beiden Dorneinheiten erforderlich. Der reib- oder kraftschlüssige Kontakt wird beispielsweise durch gegenseitiges Ankuppeln über Konen erreicht.

Infolge des reibschlüssigen Kontakts zwischen erster Dorneinheit und gerafftem Hüllenteil wird durch die Rotation der beiden Dorneinheiten die geraffte Hülle im Bereich des Raffwerkzeugs in Rotation versetzt. Somit beschreibt die Hülle gleichzeitig eine längsaxiale Vorwärtsbewegung und eine rotierende Bewegung. Das auf die Schlauchaußenseite einwirkende Raffwerkzeug erfaßt somit spiralförmig gegeneinander versetzte Flächen der Hülle, wodurch eine besonders hohe Verdichtung in der gerafften Hülle erzielt wird. Dieser Effekt wird dadurch verstärkt, daß man das Raffwerkzeug, insbesondere das obengenannte rotierende hülsenförmige Teil, vorzugsweise in Gegenrichtung zur Rotation des Raffdorns, drehen läßt, wodurch der auf dem Raffdorn aufsitzende, bereits geraffte Hüllenteil, vorzugsweise in Gegenrichtung zur Bewegung des hülsenförmigen Raffwerkzeugs, von dem Raffdorn mitgenommen wird.

Die Einrichtung wird anhand der Fig. 1 bis 4 erläutert.

Fig. 1, 1a zeigt eine Ausführungsform in Seitenansicht,

Fig. 2 zeigt die Ausführungsform der Fig. 1 von oben,

Fig. 3, 3a zeigt die wesentlichen Teile einer weiteren Ausführungsform in Seitenansicht,

Fig. 4, 4a zeigt den Schneidebereich der Ausführungsform der Fig. 1 seitlich im vergrößerten Maßstab.

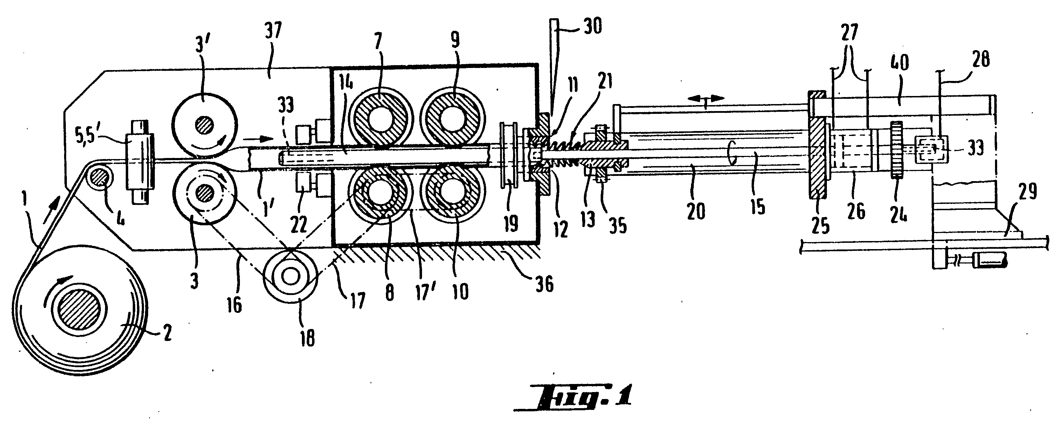

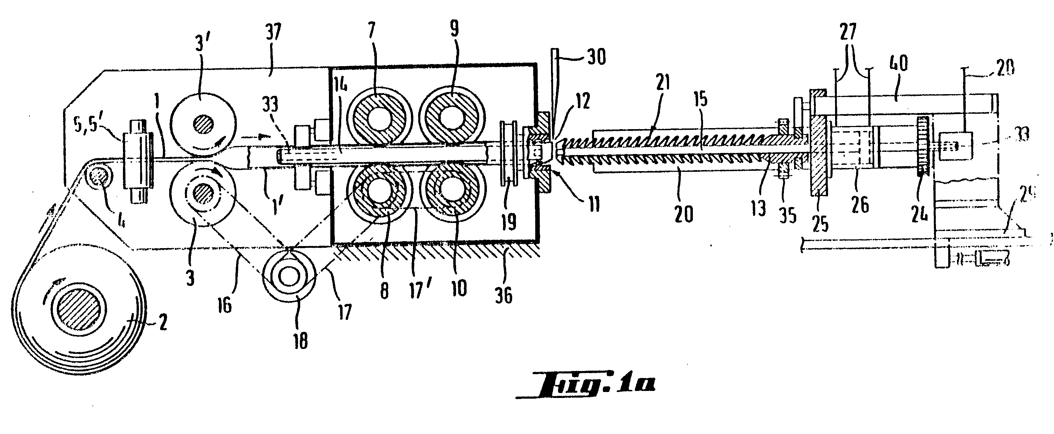

In Fig. 1, 1a wird die flachgelegte schlauchförmige Hülle 1 von dem Wickel 2 abgerollt und durch die angetriebenen Quetschwalzen 3 und 3' über Führungsrollen 4, 5 und 5' gezogen. In der nachfolgenden Raff- und Förderradgruppe wird die aufgeblasene Hülle 1' mit den Förderrädern 7, 8, 9, 10 in Raffrichtung bewegt und mit dem Raffwerkzeug 11, das in der US-A-4 185 358 näher beschrieben ist, gegen eine ringförmige Dornbuchse 13 gerafft.

Der Raffdorn besteht aus zwei Teilen, einer vorderen ersten Dorneinheit 14 und einer hinteren zweiten Dorneinheit 15, die in der Fig. 1 an der Kontaktstelle miteinander gekuppelt und in der Fig. 1a auseinandergeschoben dargestellt sind, wobei die Dorneinheit 15 nach rechts verschoben ist. Die erste Dorneinheit 14 endet im Bereich des Ausgangs 12 des Raffwerkzeugs 11. Es ist auch möglich, die erste Dorneinheit 14 entgegen der Raffrichtung zu verschieben, sobald die gewünschte Länge der Raupe 21 erreicht ist. Hierzu dient eine Zange 22, die die Dorneinheit 14 zusammen mit der Hülle 1' ergreift und axial verschiebt.

Die Quetschwalzen 3 und 3' sind über den Zahnriemen 16 und die Förderräder 7, 8, 9, 10 über die Zahnriemen 17 und 17' mit dem Antriebsmotor 18 verbunden.

Die Scheibe 19 dient zum Antrieb des Raffwerkzeugs 11, welches in Rotation um die Längsachse der Dorneinheiten 14, 15 versetzt wird. Der Antriebsriemen und der Antriebsmotor sind aus Gründen der besseren Klarheit der Zeichnung nicht dargestellt.

Die Dornbuchse 13 wird von dem hydraulischen Zylinder 40 in Raffrichtung auf dem zweiten Dornelement 15 mit zunehmender Länge der Raupe 21 verschoben, bis die Raupe 21 in der Fig. 1a ihre vorbestimmte Länge zeigt. Mit 23 ist der Drehantrieb der Ritzelwelle 20, mit 24 das Zahnrad zur Rotation der zweiten Dorneinheit 15 und mit 35 das Zahnrad zur Rotation der Dornbuchse 13 bezeichnet, wobei die Zahnräder 24 und 35 über die Ritzelwelle 20 angetrieben werden. Damit ist eine synchrone Rotation der zweiten Dorneinheit 15 und der Dornbuchse 13 gewährleistet. Die zweite Dorneinheit 15 sitzt in einer Revolverplatte 25 und wird mit dem Zylinder 26, der mit einer Hydraulik- oder Druckluftleitung 27 verbunden ist, zu Beginn des Raffvorgangs axial in das hintere Ende der ersten Dorneinheit 14 geschoben und, nachdem die Raupe 21 die gewünschte Länge erreicht hat, axial wieder von der ersten Dorneinheit 14 entfernt. Über die Preßluftleitung 28 wird durch den Hohlkanal 33 im Innern der beiden Dorneinheiten 14 und 15 Luft eingepreßt, die die Hülle 1' zwischen den Quetschwalzen 3 und 3' und dem Raffwerkzeug 11 in aufgeblasenem Zustand hält.

Die Revolverplatte 25 ist auf dem Schlitten 29 in Richtung parallel zum Raffdorn verschiebbar, so daß die Dorneinheit 15 nicht nur über den Zylinder 26, sondern auch durch die Bewegung der Revolverplatte 25 axial verschoben werden kann.

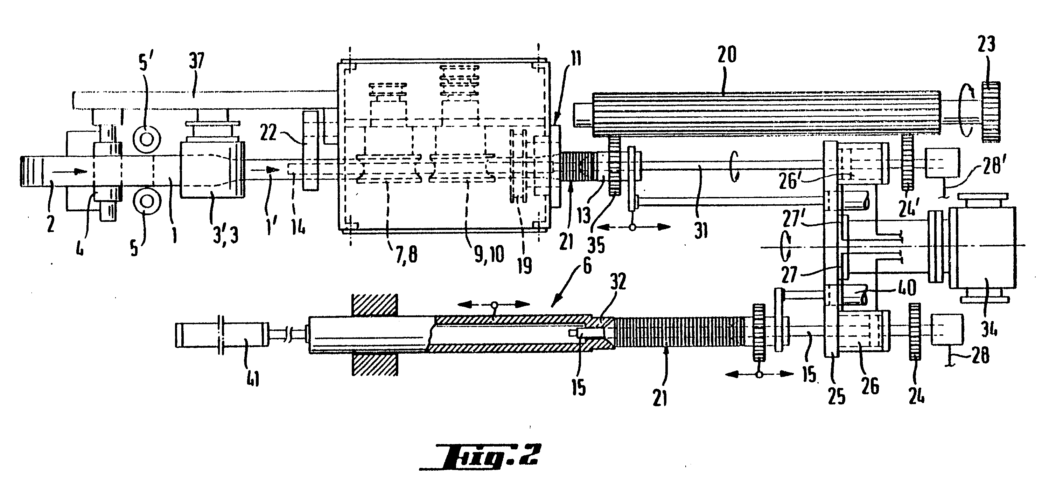

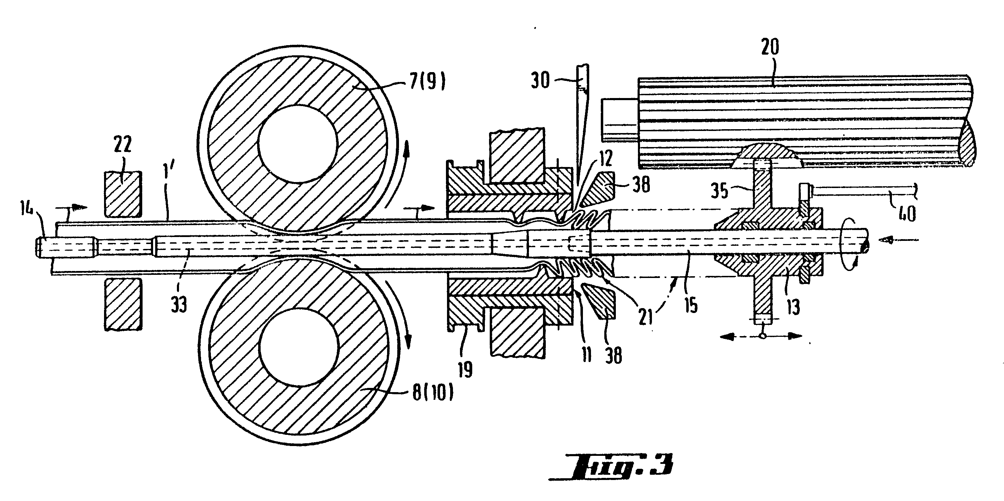

Wie in der Fig. 1a gezeigt, wird die Hülle 1', sobald die gewünschte Raupenlänge erreicht ist und die beiden Dorneinheiten 14 und 15 auseinandergefahren sind, mit dem Messer 30 durchtrennt. Danach wird die Revolverplatte 25 (Fig. 2) mit dem Schwenkmodul 34 um z. B. 180° gedreht und, wie in Fig. 2 gezeigt, eine weitere bereitstehende Dorneinheit 31 in fluchtende Position mit der ersten Dorneinheit 14 gebracht, während die mit der Raupe 21 beladene Dorneinheit 15 nun mit einem z. B. hydraulischen Zylinder 40 gegen eine Preßbuchse 32 in der Preßstation 6 geschoben werden kann, wodurch die Raupe 21 verdichtet wird. Nach Entfernen der Preßbuchse 32 z. B. axial mittels hydraulischen Zylinders 41 wird die Raupe 21 durch die Dornbuchse 13 von der Dorneinheit 15 abgeschoben und der weiteren Verarbeitung zugeführt. Mit 24', 26', 27' und 28' sind Teile bezeichnet, die mit den Teilen 24, 26, 27 und 28 baugleich sind, aber der Dorneinheit 31 zugeordnet sind. Mit 36 ist das Maschinengehäuse und 37 eine seitliche Wand bezeichnet.

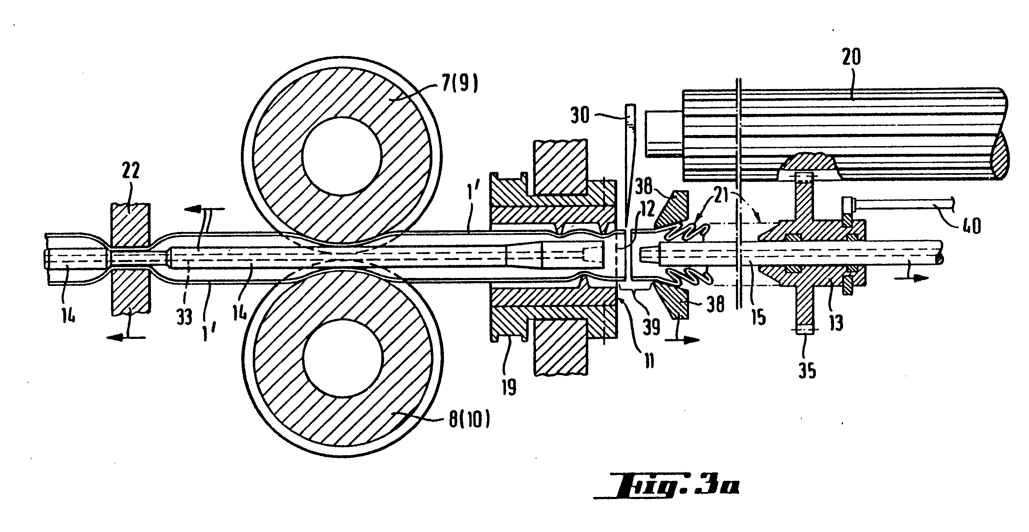

In Fig. 3, 3a wird eine Variante der Einrichtung gezeigt, bei der die erste Dorneinheit 14 während des Raffens (Fig. 3) am Ausgang 12 des Raffwerkzeugs 11 endet, jedoch ein kurzes Stück aus der Öffnung des Raffwerkzeugs 11 in Raffrichtung herausragt. Das Raffen erfolgt gegen die Dornbuchse 13, die auf der zweiten Dorneinheit 15 verschiebbar angebracht ist und mit dem hydraulischen Zylinder 40 bewegt wird. Sobald die Raupe 21 die gewünschte Länge erreicht hat, wird, wie in der Fig. 3a gezeigt, die Raupe 21 mit der elastischen Zange 38 ein kurzes Stück 39 entrafft, die Dorneinheit 14 mit der Zange 22 und/oder mit den Förderrädern 7, 8, 9, 10, entgegen der Raffrichtung gezogen und die Dorneinheit 15, wie in Fig. 1 dargestellt, in Raffrichtung entfernt. In dem entstandenen Zwischenraum zwischen den beiden nun voneinander getrennten Dorneinheiten 14 und 15 wird ein Messer 30 eingeführt, welches die Raupe 21 in dem entrafften Stück 39 durchschneidet.

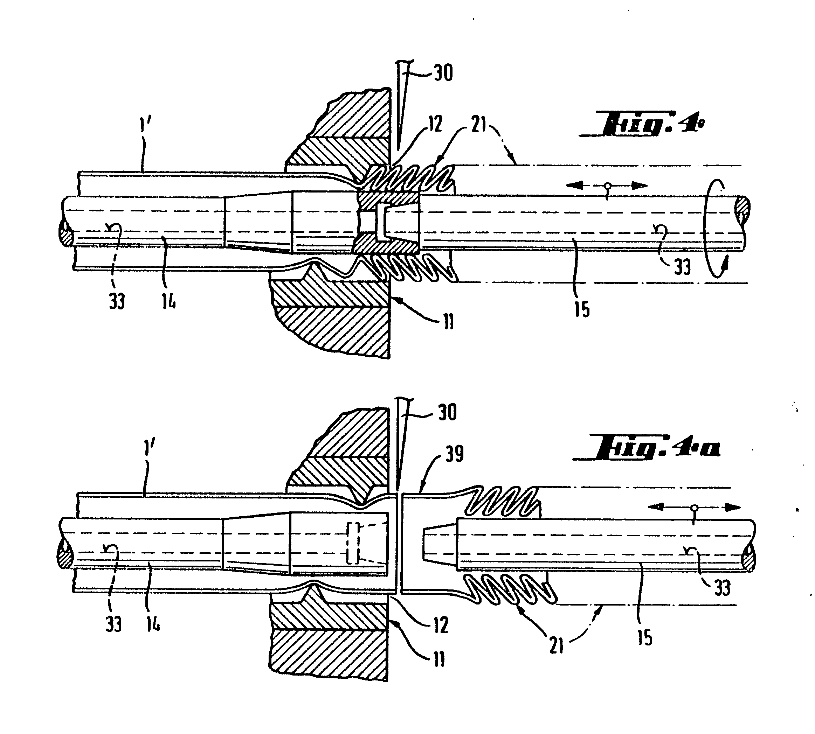

In Fig. 4, 4a ist der Schneidebereich der Fig. 1 ausschnittsweise und vergrößert dargestellt. In der Fig. 4 wird die Einrichtung während des Raffens, in der Fig. 4a kurz nach dem Durchtrennen der Hülle gezeigt, wobei die Dorneinheiten 14 und 15 voneinander weggezogen sind. Die Bezugsziffern haben die gleiche Bedeutung wie in Fig. 1.

**Patentansprüche**

1. Verfahren zum Raffen von schlauchförmigen Hüllen, insbesondere Wursthüllen, bei dem die während des Raffvorgangs in Längsrichtung geförderte Hülle ein Raffwerkzeug durchläuft, von diesem auf eine innere Abstützung in Falten gelegt und der geraffte Hüllenteil gegen eine zurückweichende Gegenkraft dicht zusammengepreßt und weiterhin von innen abgestützt wird, bei dem ferner, nachdem der geraffte Hüllenteil eine bestimmte Länge erreicht hat, die Förderung der Hülle unterbrochen und die innere Abstützung aus dem Trennbereich, der sich an den Raffbereich anschließt, herausgeschoben wird, die Länge des gerafften Hüllenteils im Trennbereich abgetrennt und aus dem Trennbereich entfernt wird, dadurch gekennzeichnet, daß der vom Raffwerkzeug im Raffbereich reibschlüssig auf die innere Abstützung in Falten gelegte Hüllenteil unmittelbar nach dem Austritt aus dem Raffwerkzeug nur noch lose von innen abgestützt wird, daß der geraffte Hüllenteil durch Rotation der reibschlüssigen inneren Abstützung während der Einwirkung des Raffwerkzeugs in Rotation um seine Längsachse versetzt wird, und daß die innere Abstützung im Raffbereich während des Trennvorgangs erhalten bleibt.

2. Verfahren nach Anspruch 1, dadurch gekennzeichnet, daß die zurückweichende Gegenkraft gleichsinnig, vorzugsweise auch mit gleicher Drehzahl, wie die innere reibschlüssige Abstützung um die Längsachse des gerafften Hüllenteils rotiert.

3. Verfahren nach Anspruch 1 oder 2, dadurch gekennzeichnet, daß man das Raffwerkzeug auch während des Trennvorgangs rotieren läßt.

4. Verfahren nach einem der Ansprüche 1 bis 3, dadurch gekennzeichnet, daß die Raffkraft von einem um die Längsachse der Hülle rotierenden Raffwerkzeug aufgebracht wird, wobei das Raffwerkzeug in Krafteingriff mit der Hülle ist, und die Drehrichtungen des Raffwerkzeugs und des gerafften Hüllenteils vorzugsweise entgegengesetzt sind.

5. Einrichtung zum Raffen von schlauchförmigen Hüllen zur Durchführung des Verfahrens nach Anspruch 1, umfassend einen hohlen Raffdorn im Innern einer zu raffenden schlauchförmigen Hülle (1') und Förderelemente (7, 8, 9, 10) zur Fortbewegung der Hülle (1') in aufgeblasenem Zustand über den Raffdorn, Elemente (28) zur Zuführung von Luft in die aufgeblasene Hülle, ein in Raffrichtung folgendes Raffwerkzeug (11), durch das sich der Raffdorn hindurch erstreckt, und ein auf das Raffwerkzeug (11) unmittelbar folgendes Trennelement (30) zum Abtrennen einer Raupe (21) nach Erreichen einer vorbestimmten Länge des gerafften Hüllenteils, wobei der Raffdorn aus zwei während des Raffvorgangs fluchtend in Eingriff bringbaren Dorneinheiten (14, 15) mit jeweils einem Hohlkanal (33) besteht, die eine der beiden Dorneinheiten (14, 15) axial von der gemeinsamen Kontaktstelle verschiebbar ist und diese Kontaktstelle sich am Ausgang (12) des Raffwerkzeugs (11) befindet, wobei ferner mindestens eine weitere Dorneinheit (31) vorgesehen ist, die im wesentlichen gleich gebaut ist wie die in Raffrichtung zweite Dorneinheit (15) und gegen die sie austauschbar ist, dadurch gekennzeichnet, daß der äußere Umfang der zweiten Dorneinheit (15), zumindest in ihrem von der besagten Kontaktstelle entfernten Bereich, kleiner ist als der äußere Umfang der ersten Dorneinheit (14) im Bereich des Raffwerkzeugs (11), daß die Dorneinheiten (14, 15) an der Kontaktstelle form-, reib- oder kraftschlüssig verbindbar sowie um ihre Längsachse rotierbar ausgebildet sind und daß Elemente (20, 24, 24', 35) zum rotierenden Antrieb der zweiten Dorneinheit (15) sowie ein den Vorschub des gerafften Hüllenteils zulassendes Widerlager (13) vorgesehen sind.

6. Einrichtung nach Anspruch 5, dadurch gekennzeichnet, daß die erste Dorneinheit (14) nur durch Förderelemente (7, 8, 9, 10) zur Fortbewegung der Hülle (1') gehalten wird, die in Raffrichtung vor dem Raffwerkzeug (11) angeordnet sind.

7. Einrichtung nach Anspruch 5 oder 6, dadurch gekennzeichnet, daß die Dorneinheiten (14, 15) zum Lösen von einander axial entgegengesetzt beweglich sind.

8. Einrichtung nach einem der Anspruch 5 bis 7, dadurch gekennzeichnet, daß die zweite Dorneinheit (15) und weitere Dornheit(en) (31) einem Plattenkörper (25) zugeordnet sind, der zum gegenseitigen Lagewechsel der zweiten Dorneinheit (15) gegen die weitere(n) Dorneinheit(en) (31) beweglich und gegebenenfalls auch zur Verschiebung der zweiten bzw. weiteren Dorneinheit (15, 31) in ihrer axialen Richtung verschiebbar ist.

9. Einrichtung nach Anspruch 8, dadurch gekennzeichnet, daß eine Preßstation (6) zum weiteren Verdichten der abgetrennten Raupe (21) vorhanden ist.

10. Einrichtung nach einem der Ansprüche 5 bis 9, dadurch gekennzeichnet, daß das Element (20) zum rotierenden Antrieb der zweiten Dorneinheit (15) auch für den synchronen rotierenden Antrieb des Widerlagers (13) ausgebildet ist.

11. Einrichtung nach einem der Ansprüche 5 bis 10, dadurch gekennzeichnet, daß sich die Elemente (28) zur Zuführung von Luft an dem der Kontaktstelle gegenüberliegenden Ende der zweiten Dorneinheit (15) befinden und zur Einleitung von Luft in den Hohlkanal (33) der zweiten Dorneinheit (15) ausgebildet sind.

12. Einrichtung nach einem der Ansprüche 5 bis 11, dadurch gekennzeichnet, daß das Raffwerkzeug aus einem die Hülle umschließenden und in Rotation um die Hülle versetzbaren Ringteil besteht, welches vorzugsweise in Gegenrichtung zur Drehrichtung der Dorneinheiten (15, 31) rotierbar ausgebildet ist.

### Claims

1. Process for shirring tubular casings, in particular sausage casings, in which the casing, which during the shirring process is being moved in the direction of its longitudinal axis, is conveyed through a shirring tool, by which it is folded on an internal support, and the shirred portion of the casing is densely compressed against a receding counterforce while still being supported internally, and in which the transport of the casing is interrupted when the shirred portion of the casing has reached a predetermined length, and the internal support is removed from the severing region adjoining the shirring region, and the shirred portion of the casing is severed in the severing region and removed from the severing region, characterized in that the folded portion of the casing, which has been laid into folds by the shirring tool in a way such that it is non-positively supported by the internal support in the shirring region, is only loosely supported internally as soon as it has left the shirring tool that by the rotation of the non-positive internal support the shirred tubing portion is caused to rotate about its longitudinal axis during the action of the shirring tool, and that the internal support is maintained in the shirring region during the severing step.

2. Process as claimed in Claim 1, wherein the receding counterforce rotates about the longitudinal axis of the shirred portion of the casing in the same direction, and preferably also at the same speed, as the internal non-positive support.

3. Process as claimed in Claim 1 or 2, wherein the tool exerting the shirring force rotates even during the severing step.

4. Process as claimed in any of Claims 1 to 3, wherein the shirring force is applied by a shirring tool which rotates about the longitudinal axis of the casing, whereby said shirring tool is in non-positive contact with the casing and said tool and the shirred casing preferably rotate in opposite directions.

5. Apparatus for shirring tubular casings, which is suitable for performing the process of Claim 1 and comprises a hollow shirring mandrel located in the interior of a tubular casing (1') to be shirred and conveying elements (7, 8, 9, 10) for conveying the casing (1') in the inflated state over the shirring mandrel, elements (28) for supplying air to the inflated casing, a shirring tool (11) subsequently arranged in the direction of shirring, through which the shirring mandrel extends, and a severing tool (30) immediately adjoining the shirring tool (11), for cutting off a shirred stick (21) when the shirred tubing portion has reached a predetermined length, whereby the shirring mandrel is comprised of two mandrel members (14, 15), which can be brought into straight alignment with each other and are each provided with a hollow channel (33), it being possible to shift one of the two mandrel members (14, 15) in the axial direction, away from the common contact point, and this contact point being located at the rear aperture (12) of the shirring tool (11), and whereby furthermore at least one further mandrel member (31) is provided, the construction of which is substantially identical to that of the second mandrel member (15), seen in the direction of shirring, and which can be exchanged for said second mandrel member (15), characterized in that the outer circumference of the second mandrel member (15), at least in the area beyond said contact point, is smaller than the outer circumference of the first mandrel member (14) in the region of the shirring tool (11), that the mandrel members (14, 15) can be connected positively or non-positively at the contact point and can be rotated about their longitudinal axes, and that elements (20, 24, 24', 35) for rotatably driving the second mandrel member (15) and an abutment (13) permitting an advance movement of the shirred tubing portion are provided.

6. Apparatus as claimed in Claim 5, wherein the first mandrel member (14) is only held by conveying elements (7, 8, 9, 10) for conveying the casing (1'), which are installed before the shirring tool (11), seen in the direction of shirring.

7. Apparatus as claimed in Claim 5 or 6, wherein the mandrel members (14, 15) can be axially moved in opposite directions, in order to separate them from each other.

8. Apparatus as claimed in any of Claims 5 to 7, wherein the second mandrel member (15) and further mandrel member(s) (31) are allocated to a turret means (25) which, for the purpose of exchanging the second mandrel member (15) for the further mandrel member(s) (31), is movable and, if appropriate, can be shifted along its longitudinal axis for the purpose of shifting the second, or respectively, the further mandrel member(s) (15, 31).

9. Apparatus as claimed in Claim 8, wherein a compressing station (6) for compressing the severed shirred stick (21) more densely is provided.

10. Apparatus as claimed in any of Claims 5 to 9, wherein the element (20) for rotatably driving the second mandrel member (15) is designed such that it simultaneously ensures a synchronous rotating drive of the abutment (13).

11. Apparatus as claimed in any of Claims 5 to 10, wherein the elements (28) for supplying air are located at that end of the second mandrel member which is opposite the contact point and are designed such that air is supplied to the hollow channel (33) of the second mandrel member (15).

12. Apparatus as claimed in any of Claims 5 to 11, wherein the shirring tool is comprised of a sleeve-type element, which surrounds the casing and can be caused to rotate about the casing, and which is preferably designed such that its sense of rotation is counter to the sense of rotation of the mandrel members (15, 31).

**Revendications**

1. Procédé pour le plissage d'enveloppes en forme de boyau, en particulier enveloppes pour saucisses, dans lequel l'enveloppe transportée en direction longitudinale pendant l'opération de plissage traverse un outil de plissage, est mise en plis par celui-ci sur un support interne, et la portion plissée de l'enveloppe est tassée sur elle-même de façon dense contre une force opposée reculant, et de plus est supportée de l'intérieur, dans lequel en outre, une fois atteinte une longueur déterminée de la portion plissée de l'enveloppe, le transport de l'enveloppe est interrompu et le support interne est retiré de la zone de sectionnement qui fait suite à la zone de plissage, la portion plissée de l'enveloppe est sectionnée dans la zone de sectionnement, puis éloignée de la zone de sectionnement, caractérisé en ce que la portion de l'enveloppe mise en plis par l'outil de plissage dans la zone de plissage, en contact à friction sur le support interne, n'est plus supportée immédiatement après la sortie de l'outil de plissage que d'une façon lâche de l'intérieur, en ce que la portion plissée de l'enveloppe est mise en rotation autour de son axe longitudinal pendant l'action de l'outil de plissage, par rotation du support interne à contact à friction, et en ce que le support interne est maintenu dans la zone de plissage pendant l'opération de sectionnement.

2. Procédé selon la revendication 1, caractérisé en ce que la force opposée qui recule est mise en rotation autour de l'axe longitudinal de la portion plissée de l'enveloppe dans le même sens, et de préférence à la même vitesse que le support interne à contact à friction.

3. Procédé selon la revendication 1 ou 2, caractérisé en ce que l'on met en rotation l'outil de plissage également pendant l'opération de sectionnement.

4. Procédé selon l'une des revendications 1 à 3, caractérisé en ce que la force de plissage est appliquée par un outil de plissage en rotation autour de l'axe longitudinal de l'enveloppe, l'outil de plissage étant en contact en force avec l'enveloppe, et les directions de rotation de l'outil de plissage et de la portion plissée de l'enveloppe étant de préférence opposées.

5. Dispositif pour le plissage d'enveloppes en forme de boyau pour la mise en œuvre du procédé selon la revendication 1, comprenant un mandrin creux de plissage à l'intérieur d'une enveloppe en forme de boyau (1') à plisser et des éléments transporteurs (7, 8, 9, 10) pour le transport de l'enveloppe (1') à l'état gonflé sur le mandrin de plissage, des éléments (28) pour l'introduction d'air dans l'enveloppe gonflée, un outil de plissage (11) placé à la suite en direction du plissage, au travers duquel s'étend le mandrin de plissage, et un élément de sectionnement (30) faisant immédiatement suite à l'outil de plissage (11), pour le sectionnement d'une chenille (21) une fois atteinte une longueur préétablie de la portion plissée de l'enveloppe, le mandrin de plissage étant composé de deux unités de mandrin (14, 15) comportant chacune un canal creux (33), aptes à être mises en contact en alignement pendant l'opération de plissage, chacune des deux unités de mandrin (14, 15) pouvant être éloignée axialement du point de contact commun et ce point de contact se trouvant à la sortie (12) de l'outil de plissage (11), en outre au moins une autre unité de mandrin (31) étant prévue, ayant essentiellement la même constitution que la seconde unité de mandrin (15) en direction du plissage, et contre laquelle elle peut être échangée, caractérisé en ce que la périphérie externe de la seconde unité de mandrin (15), au moins dans sa région éloignée dudit point de contact, est inférieure à la circonférence externe de la première unité de mandrin (14) dans la zone de l'outil de plissage (11), en ce que les unités de mandrin (14, 15) sont conçues de manière à pouvoir être assemblées par contact par emboîtement, à friction ou en force, au point de contact, et à pouvoir tourner autour de leur axe longitudinal, et en ce que sont prévus des éléments (20, 24, 24', 35) pour l'entraînement rotatif de la seconde unité de mandrin (15), ainsi qu'une butée (13) permettant l'avancement de la portion plissée de l'enveloppe.

6. Dispositif selon la revendication 5, caractérisé en ce que la première unité de mandrin (14) n'est maintenue que par des éléments transporteurs (7, 8, 9, 10) pour le transport de l'enveloppe (1'), qui sont disposés avant l'outil de plissage (11) en direction du plissage.

7. Dispositif selon la revendication 5 ou 6, caractérisé en ce que les unités de mandrin (14, 15) sont mobiles axialement en sens contraire pour être séparées l'une de l'autre.

8. Dispositif selon l'une des revendications 5 à 7, caractérisé en ce que la seconde unité de mandrin (15) et une ou plusieurs autres unités de mandrin (31) sont affectées à un corps en forme de plaque (25) qui est mobile pour le changement de position réciproque entre la seconde unité de mandrin (15) et l'autre ou les autres unités de mandrin (31) et éventuellement est aussi mobile dans sa direction axiale pour le déplacement de la seconde ou de l'autre unité de mandrin (15, 31).

9. Dispositif selon la revendication 8, caractérisé en ce qu'un poste de tassement (6) est présent pour le tassement plus poussé de la chenille séparée (21).

10. Dispositif selon l'une des revendications 5 à 9, caractérisé en ce que l'élément (20) pour l'entraînement rotatif de la seconde unité de mandrin (15) est conçu également pour l'entraînement rotatif synchrone de la butée (13).

11. Dispositif selon l'une des revendications 5 à 10, caractérisé en ce que les éléments (28) pour l'introduction d'air se trouvent à l'extrémité de la seconde unité de mandrin (15) opposée au point de contact, et sont conçus de manière à permettre l'introduction d'air dans le canal creux (33) de la seconde unité de mandrin (15).

12. Dispositif selon l'une des revendications 5 à 11, caractérisé en ce que l'outil de plissage est composé d'un élément annulaire entourant l'enveloppe et apte à être mis en rotation autour de l'enveloppe, lequel est conçu de préférence de manière à pouvoir tourner en sens opposé au sens de rotation des unités de mandrin (15, 31).

Fig.1

0 131 753

**Fig. 1a**

Fig. 2

0 131 753

Fig. 3

0 131 753

Fig. 3a

Fig. 4

Fig. 4a